# EUROPÄISCHE PATENTSCHRIFT

(11) **EP 0 782 900 B1**
(45) Veröffentlichungstag und Bekanntmachung des Hinweises auf die Patenterteilung: **24.03.1999**
(21) Anmeldenummer: 96117204.6
(22) Anmeldetag: 26.10.1996
(51) Int. Cl.: B23Q 3/157

(54) **Werkzeugmaschine**
Machine tool
Machine-outil

(30) Priorität: 03.01.1996 DE 19600055
(43) Veröffentlichungstag der Anmeldung: 09.07.1997
(73) Patentinhaber: Chiron-Werke GmbH & Co. KG, 78532 Tuttlingen (DE)
(72) Erfinder: Rütschle, Eugen, 78570 Mühlheim (DE)
(74) Vertreter: Otten, Hajo, Dr.-Ing.

(56) Entgegenhaltungen:
- DE-A- 3 409 682
- DE-A- 3 831 869

## Beschreibung

Die Erfindung betrifft eine Werkzeugmaschine mit einer Spindel und einem Werkzeugwechsler zum Überführen von Werkzeughaltern zwischen einer Magazinposition und einer Arbeitsposition an der Spindel im wesentlichen unter Beibehaltung der Ausrichtung der Werkzeughalter, wobei die Werkzeughalter in an dem Werkzeugwechsler vorgesehenen Greifer gehalten sind.

Eine Werkzeugmaschine der vorstehend genannten Art ist aus der DE 38 31 869 A1 bekannt.

Bei der bekannten Werkzeugmaschine befindet sich die Magazinposition oberhalb der Arbeitsposition und ist in der Vorderansicht der Werkzeugmaschine seitlich gegenüber der Arbeitsposition versetzt. Zwei Greifarme sind auf gegenüberliegenden Seiten der Arbeitsposition angelenkt. Die Greifarme werden durch ein Gestänge und ein Kulissenelement einander überkreuzend entlang von Ortskurven bewegt, deren gemeinsamer Anfangs- und Endpunkt die Magazinposition bzw. die Arbeitsposition sind. Wenn der eine Greifarm einen Werkzeughalter von der Magazinposition zur Arbeitsposition überführt, bringt der andere Greifarm einen Werkzeughalter von der Arbeitsposition zur Magazinposition. Dieser bekannte Werkzeugwechsler erlaubt schnelle Werkzeugwechselzeiten und einen kompakten Aufbau der Werkzeugmaschine, da die Werkzeughalter während des Wechselvorganges relativ eng aneinander vorbei bewegt werden.

Der Mechanismus, bestehend aus dem Gestänge und dem Kulissenelement, der zu derartigen Ortskurven führt, ist jedoch relativ kompliziert im Aufbau.

Aus der DE 43 29 252 A1 ist eine weitere Werkzeugmaschine bekannt, bei der die Übergabeposition und die Arbeitsposition in einer gemeinsamen Vertikalebene liegen. Der Werkzeugwechsler dieser Werkzeugmaschine weist ebenfalls zwei Greifarme auf, die mittels eines Gestänges derart gekoppelt sind, daß ihre Ortskurven im Bereich zwischen der Arbeitsposition und der Magazinposition seitlich beabstandet von der Vertikalebene verlaufen.

Auch dieser bekannte Werkzeugwechsler hat einen relativ komplizierten Aufbau. Insbesondere weist das die beiden Greifarme verbindende Gestänge eine Reihe von komplexen Gelenkanordnungen auf.

Die Greifarme dieser beiden bekannten Werkzeugmaschinen sind als Parallelogrammführungen ausgebildet, so daß die Werkzeughalter unter Beibehaltung ihrer Ausrichtung von der Magazinposition zur Arbeitsposition und zurück überführt werden.

Bei Werkzeugmaschinen dieser Art ist man generell bestrebt, die Werkzeugweshselzeiten zu minimieren, wobei der Wechslermechanismus möglichst kompakt und störunanfällig aufgebaut sein sollte. Man ist darüber hinaus auch bestrebt, den Wechslermechanismus weitgehend vor herumfliegenden Spänen und herumspritzender Bohrflüssigkeit zu schützen.

Aus der DE-34 09 682 A1 ist weiterhin eine Werkzeug maschine bekannt, bei der der Werkzeugwechsler ein Parallelogrammgestänge aufweist.

Der Erfindung liegt daher die Aufgabe zugrunde, eine Werkzeugmaschine der eingangs genannten Art dahingehend weiterzubilden, daß der Werkzeugwechsler einen möglichst einfachen und kompakten Aufbau erhält.

Diese Aufgabe wird bei einer Werkzeugmaschine der eingangs genannten Art dadurch gelöst, daß der Werkzeugwechsler zwei Längsstäbe und zwei Querstäbe aufweist, die über Kreuzgelenke zu einem Gelenkviereck verbunden sind, daß die Längsstäbe im Bereich ihrer Mitte drehbar gelagert sind und daß an den Stäben zwei Greifer zum Ergreifen der Werkzeughalter angebracht sind, derart, daß bei einer Rotation der Längsstäbe die Greifer zwischen der Magazinposition und der Arbeitsposition überführt werden.

Der erfindungsgemäße Werkzeugwechsler hat den Vorteil eines äußerst einfachen Aufbaus mit einer minimalen Anzahl von Einzelelementen. Der Werkzeugwechsler ist daher äußerst störunanfällig. Die bewegten Massen sind sehr gering, so daß hohe Beschleunigungen und damit schnelle Werkzeugwechselzeiten erzielbar sind. Durch den einfachen Aufbau ist es darüber hinaus leicht möglich, den Werkzeugwechsler vor herumfliegenden Materialspänen und herumspritzendem Bohrwasser zu schützen.

Allgemein gesagt erfolgt der Werkzeugwechselvorgang durch eine Rotationsbewegung. Dies bedeutet eine Abkehr von dem bisher verfolgten Ansatz, den Werkzeugwechsel durch koordinierte Schwenkbewegungen zweier Greifarme zu erreichen. Durch die Maßnahme, die Längs- und Querstäbe des Gelenkviereckes durch Kreuz- bzw. Kardangelenke zu verbinden, führt die Rotationsbewegung entgegen der Erwartung nicht dazu, daß sich die Ausrichtung der von den Greifern gehaltenen Werkzeughalter umkehrt. Es ist vielmehr so, daß die mit den rotierenden Längsstäben kardanisch verbundenen Querstäbe während des gesamten Rotationsvorganges ihre Ausrichtung beibehalten.

Die Lagerung des Werkzeugwechslers an der Werkzeugmaschine kann durch einfache Wälzlager erfolgen, aufwendige Gestänge oder Kulissenelemente sind nicht notwendig.

Die Aufgabe wird somit vollkommen gelöst.

Gemäß einer bevorzugten Weiterbildung sind die Greifer an den Querstäben angebracht.

Durch diese Maßnahme wird auf vorteilhafte Weise von dem Umstand Gebrauch gemacht, daß die Querstäbe während einer Rotation der Längsstäbe ihre Ausrichtung beibehalten.

Gemäß einer besonders bevorzugten Ausführungsform sind Achsen, auf denen die Längsstäbe drehbar gelagert sind, parallel versetzt, so daß die Stäbe zumindest in einer Ausgangsposition, bei der ein Querarm im Bereich der Arbeitsposition und der andere Querarm im Bereich der Magazinposition ist, ein Gelenkparallelogramm bilden.

Durch diese Maßnahme wird zum einen ein besonders kompakter Aufbau, zumindest in der Ausgangsstellung erreicht. Zum anderen ist es bei entsprechender Ausrichtung der Achsen, auf denen die Längsstäbe drehbar gelagert sind, besonders leicht möglich, Werkzeughalter von einer vertikal höher gelegenen Magazinposition zu einer tiefer gelegenen Arbeitsposition zu verfahren.

Vorzugsweise liegt dabei der Abstand der parallelen Achsen im Bereich zwischen einer halben und einer viertel Länge der Längsstäbe, vorzugsweise bei etwa einem Drittel der Länge der Längsstäbe.

Mit einem Abstand der parallelen Achsen in dieser Größenordnung sind die Längsstäbe zumindest in der Ausgangsstellung hinreichend nah aneinander angeordnet, um einen kompakten Aufbau zu erzielen. Zum anderen ist der durch diese Maßnahme bedingte Abstand zwischen den Längsstäben in der Ausgangsstellung hinreichend groß, um entsprechend dimensionierte Lager an den Achsen vorzusehen.

Gemäß einer besonders bevorzugten Ausführungsform sind die Achsen gegenüber der Horizontalen so geneigt, daß die Querarme vertikal ausgerichtet sind.

Da die Werkzeughalter sowohl im Werkzeugmagazin als auch an der Spindel in aller Regel vertikal gehalten sind, wird durch diese Maßnahme auf vorteilhafte Weise erreicht, daß die Werkzeughalter beim Überführen von Arbeitsposition in Magazinposition und umgekehrt immer lagerichtig ankommen. Es ist also durch diese Maßnahme nicht notwendig, die Greifer zum Ergreifen der Werkzeughalter gegenüber den Querstäben geneigt anzubringen. Somit wird der konstruktive Aufwand weiter minimiert.

Vorzugsweise sind die Achsen dabei in einem Bereich von 10 bis 30°, vorzugsweise um 20° geneigt.

Bei einer solchen Neigung, die, will man die Querarme vertikal ausrichten, mit dem Abstand der parallelen Achsen korreliert, halten sich die an den Lagern der Längsarme auftretenden Axialkräfte vorteilhafterweise in Grenzen.

Gemäß einer bevorzugten Ausführungsform liegt das Verhältnis der Länge der Längsarme zur Länge der Querarme zwischen 2 und 4, vorzugsweise bei etwa 3.

Ein derartiges Längenverhältnis bietet vorteilhafterweise einen guten Kompromiß zwischen Erzielung eines hinreichenden Raumbedarfes im Inneren des Gelenkviereckes zur Aufnahme der Lager, Minimierung der Länge und damit des Gewichtes der Stäbe insgesamt sowie der Anbringungsmöglichkeit der Hände an den Querelementen.

Gemäß einem bevorzugten Ausführungsbeispiel sind die Achsen durch ein Koppelglied verbunden.

Dies hat zum einen den großen Vorteil, daß nur eine der Achsen an der Werkzeugmaschine zu lagern ist. Bei hinreichender Steifigkeit des Koppelgliedes ist eine solche Verbindung auch unter Festigkeitsgesichtspunkten unproblematisch. Darüber hinaus hat eine solche Verbindung der Achsen, von denen dann nur eine an der Werkzeugmaschine gelagert ist, den Vorteil, daß sich die Achsen beim Auftreten von Schwingungen, Stößen oder dgl. immer synchron bewegen, wodurch Verklemmungen des Gelenkviereckes aus den vier Stäben verhindert werden.

Gemäß einem weiteren bevorzugten Ausführungsbeispiel sind die Längsstäbe antriebsmäßig miteinander gekoppelt.

Aufgrund der Kinematik des Gelenkviereckes aus den vier Stäben bewegt sich bei Antrieb von einem der Längsstäbe der andere Längsstab auch ohne eine solche antriebsmäßige Kopplung mit. Die Kopplung hat jedoch den Vorteil, daß die die Stäbe verbindenden Kreuzgelenke nahezu keine Kräfte aufnehmen müssen. Hierdurch können die - radial außen liegenden - Kreuzgelenke kleiner dimensioniert werden, was der angestrebten Minimierung des Gesamtgewichtes zugute kommt. Insgesamt sind durch diese Maßnahme große Rotationsbeschleunigungen möglich, wodurch die Werkzeugwechselzeit optimiert werden kann.

Bei einem bevorzugten Ausführungsbeispiel sorgt ein Zahnradgetriebe für die antriebsmäßige Kopplung, durch welches bekanntlich mit relativ geringem baulichen Aufwand hohe Drehmomente übertragen werden können. Es sind jedoch auch andere antriebsmäßige Kopplungen wie z.B. Riemen, Ketten oder ähnliches denkbar. Entscheidend ist, wie gesagt, daß durch eine solche antriebsmäßige Kopplung die von den Kreuzgelenken aufzunehmenden Kräfte verringert werden.

Gemäß einem bevorzugten Ausführungsbeispiel weist das Zahnradgetriebe eine zentrale Zahnradwalze sowie zwei Zahnräder auf, die mit den zwei Längsstäben jeweils starr verbunden sind und mit der zentralen Zahnradwalze kämmen.

Ein solches Zahnradgetriebe ist besonders leicht herzustellen und konstruktiv leicht im Inneren des Gelenkviereckes unterzubringen.

Dabei ist es von besonderem Vorteil, wenn die zentrale Zahnradwalze an dem Koppelglied drehbar gelagert ist.

Durch diese Maßnahme wird der bauliche Aufwand weiter reduziert. Die Teileanzahl wird minimiert.

Es ist weiterhin von Vorteil, wenn das Koppelglied hohl ist.

Zum einen kann hierdurch auf einfache Weise eine Energiezufuhr zu den Greifern zum Ergreifen der Werkzeughalter erfolgen. Zum anderen ist es möglich, wenigstens einen Teil des Zahnradgetriebes im Inneren des Koppelgliedes aufzunehmen, wodurch dieses weitgehend gegenüber äußeren Einflüssen geschützt ist.

Schließlich ist es von Vorteil, wenn das Koppelglied gleichzeitig als Spritzschutz gebildet ist.

Durch diese Maßnahme können die Lager für die Längsarme, aber auch Teile des Zahnradgetriebes weitgehend vor herumfliegenden Materialspänen und/oder herumspritzendem Bohrwasser geschützt werden.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Vorderansicht auf ein Ausführungsbeispiel einer erfindungsgemäßen Werkzeugmaschine;
- Fig. 2: eine Seitenansicht der in Fig. 1 gezeigten Werkzeugmaschine;
- Fig. 3: eine schematische Vorderansicht auf ein Ausführungsbeispiel eines Werkzeugwechslers der erfindungsgemäßen Werkzeugmaschine;
- Fig. 4: eine schematische Draufsicht auf einen Greifer des in Fig. 3 gezeigten Werkzeugwechslers;
- Fig. 5: eine schematische Darstellung von Phasen während eines Werkzeugwechselvorganges mit dem Werkzeugwechsler von Fig. 3; und
- Fig. 6: ein weiteres Ausführungsbeispiel eines Werkzeugwechslers der erfindungsgemäßen Werkzeugmaschine.

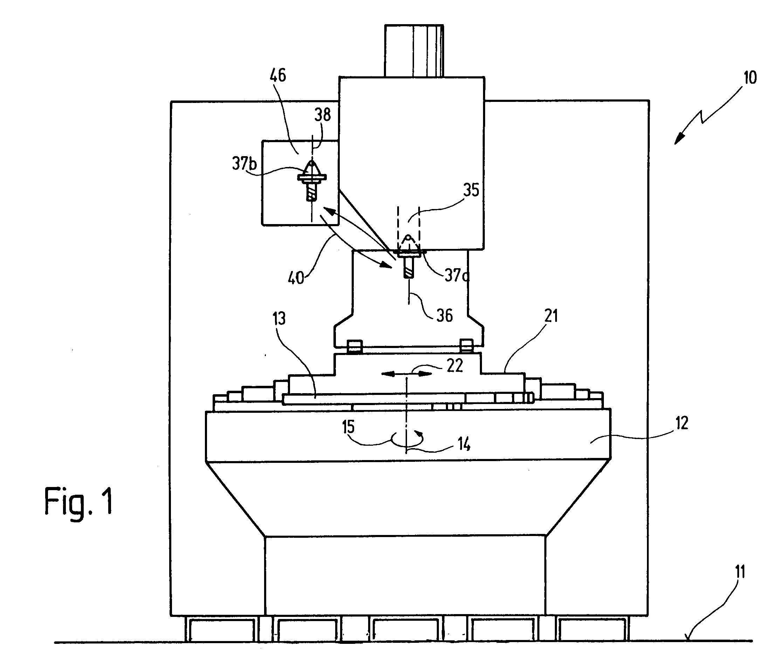

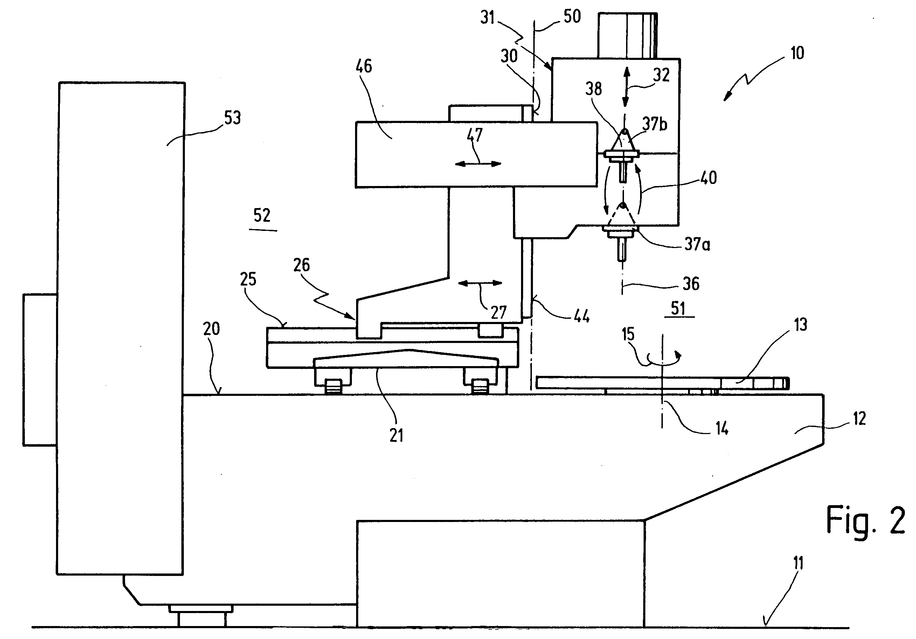

In den Fig. 1 und 2 bezeichnet 10 insgesamt eine Werkzeugmaschine. Die Werkzeugmaschine 10 ist ein sogenanntes Bearbeitungszentrum, d.h. eine Werkzeugmaschine, die an Werkstücken vorzugsweise Bohr- und Fräsarbeiten ausführt, und zwar unter numerischer Kontrolle eines Steuergerätes. Für die verschiedenen Bearbeitungsschritte werden im Bearbeitungszentrum vorbestimmte Werkzeuge aus einem Werkzeugmagazin ausgewählt und in die Spindel eingespannt. Nach Abschluß des Bearbeitungsschrittes wird das Werkzeug gewechselt, und mit dem nächsten Werkzeug wird der nächste Bearbeitungsschritt ausgeführt.

Die Werkzeugmaschine 10 steht auf einem Fundament 11 und umfaßt einen Werkstücktisch 12, der im dargestellten Ausführungsbeispiel raumfest ist. Es sind jedoch auch Bearbeitungszentren mit im Raum verfahrbaren Werkstücktischen bekannt.

Auf dem Werkstücktisch 12 befindet sich ein Werkstückwechsler 13. Der Werkstückwechsler 13 besteht im wesentlichen aus einem Tisch, der um eine vertikale Achse 14 verdrehbar ist, wie mit einem Pfeil 15 angedeutet. Der Werkstückwechsler 13 dreht sich bei Beginn bzw. beim Ende jedes Bearbeitungsvorganges um 180°, so daß auf der einen Seite des Werkstückwechslers 13 das zuvor bearbeitete Werkstück entnommen und ein neues, noch rohes Werkstück aufgespannt werden kann, während auf der gegenüberliegenden Seite des Werkstückwechslers 13 das zuvor aufgespannte Werkstück gerade bearbeitet wird.

Bei der Werkzeugmaschine 10 können die Werkzeuge relativ zum Werkstück entlang von drei kartesischen Koordinaten verfahren werden.

Hierzu dient zuerst ein erster, mit dem Werkstücktisch 12 verbundener Support 20, auf dem ein erster Schlitten 21 in Längsrichtung verfahrbar ist, wie mit einem Pfeil 22 angedeutet. Diese Verfahrachse wird als X-Achse bezeichnet.

Der erste Schlitten 21 trägt einen zweiten Support 25 mit einer Führung für einen zweiten Schlitten 26, der auch als Fahrständer bezeichnet wird. Der zweite Schlitten 26 ist in einer Richtung 27 senkrecht zur Verfahrrichtung des ersten Schlittens 21 verfahrbar. Die Verfahrachse des zweiten Schlittens bzw. Fahrständers 26 wird als Y-Achse bezeichnet.

Die X-Achse und die Y-Achse bilden die horizontalen Hauptachsen der Werkzeugmaschine 10.

An Fahrständer 26 befindet sich ein dritter Support 30 für einen dritten Schlitten, der den Spindelstock 31 trägt. Die Verfahrachse des Spindelstocks 31 verläuft vertikal und wird als Z-Achse bezeichnet. Sie ist in Fig. 2 mit einem Pfeil 32 angedeutet. Die Z-Achse bildet die dritte, vertikale Hauptachse der Werkzeugmaschine 10.

Im Spindelstock 31 befindet sich eine Spindel 35, deren Achse, wie erwähnt, vertikal verläuft und damit eine Arbeitsposition 36 für Werkzeuge definiert.

Die eigentlichen Werkzeuge sind in Werkzeughaltern gehalten, von denen in Fig. 1 und 2 mit 37a derjenige bezeichnet ist, der sich im dargestellten Zustand gerade in einer Werkzeugaufnahme der Spindel 35 befindet.

Mit 37b ist ein zweiter Werkzeughalter bezeichnet, der sich oberhalb und in Vorderansicht seitlich versetzt gegenüber der Arbeitsposition 36 befindet, und zwar an einer Übergabeposition bzw. Magazinposition 38. Die Werkzeughalter 37a und 37b sind beide vertikalachsig ausgerichtet.

Zum Überführen der Werkzeughalter 37a, 37b zwischen Arbeitsposition 36 und Magazinposition 38 dient ein in den Fig. 1 und 2 lediglich schematisch angedeuteter Werkzeugwechsler 40, der nachstehend noch in größerer Genauigkeit beschrieben werden wird.

Seitlich an dem Spindelstock 31, auf Höhe der Magazinposition 38 befindet sich ein Speicher 46 eines Werkzeugmagazins. Der Speicher 46 steht mit einer mit einem Pfeil 47 angedeuteten Transporteinrichtung in Verbindung, um einzelne Werkzeughalter aus dem Speicher 46 zur Magazinposition 38 zu bringen oder umgekehrt. Der Speicher 46 und die Transporteinrichtung 47 bilden damit zusammen das Werkzeugmagazin.

Der Speicher 46 ist, wie gesagt, bei dem Ausführungsbeispiel der Fig. 1 und 2 mit dem Spindelstock 31 verbunden und wird daher zusammen mit diesem entlang aller drei Hauptachsen X, Y, Z verfahren, wie dies an sich unter der Fachbezeichnung "variable Werkzeugwechselebene" bekannt ist.

Mit 50 ist schließlich in Fig. 2 angedeutet, daß ungefähr in der Ebene der Vorderseite 44 des Fahrständers 26 eine Trennwand vorgesehen werden kann, die eine vollständige Kapselung des vorderen Bereiches der Werkzeugmaschine 10 vom hinteren Bereich ermöglicht. Mit der Trennwand 50 kann insbesondere der Arbeitsraum 51 der Werkzeuge vom rückwärtigen Raum 52 bzw. den dort befindlichen Aggregaten getrennt werden, bspw. den Installationskästen 53 und dgl.

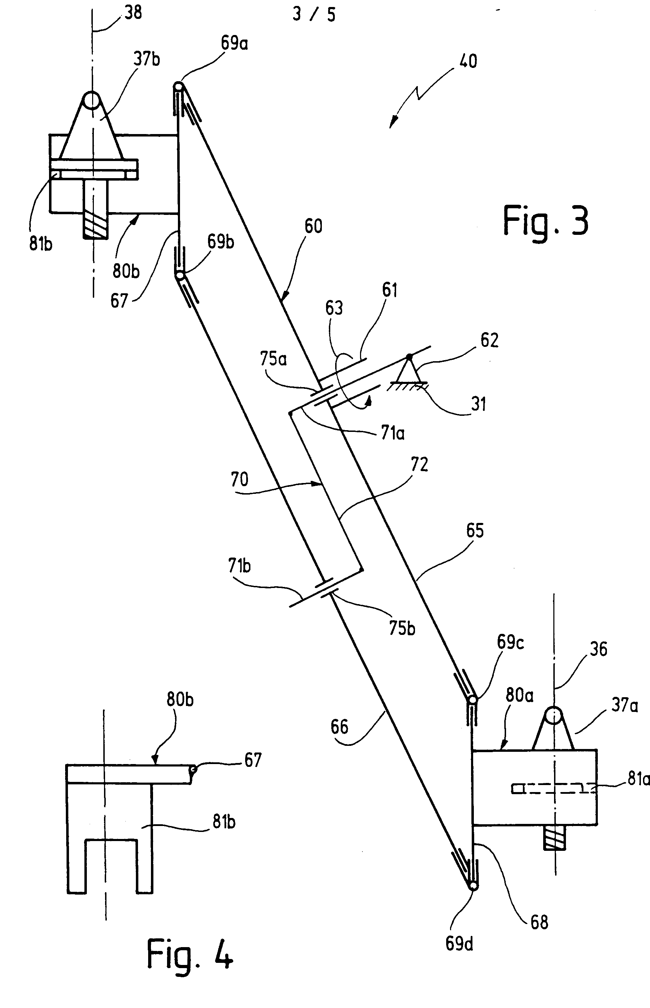

Fig. 3 zeigt eine schematische Darstellung eines Werkzeugwechslers 40, der bei der erfindungsgemäßen Werkzeugmaschine 10 eingesetzt wird.

Der Werkzeugwechsler 40 besteht im wesentlichen aus einem Rotorgetriebe 60, welches durch eine Antriebswelle 61 in Drehung versetzt wird, wie durch einen Pfeil 63 angedeutet ist. Das Rotorgetriebe 60 weist zwei Längsstäbe 65, 66 und zwei Querstäbe 67, 68 auf, die durch Kreuzgelenke 69a bis 69d zu einem Gelenkparallelogramm verbunden sind.

Die Längsstäbe 65, 66 sind jeweils mittig über Lager 75a, 75b drehbar um Achsen 71a, 71b gelagert. Die Achsen 71a, 71b sind durch ein Koppelglied 72 starr verbunden und bilden zusammen mit diesem eine Koppeleinrichtung 70.

Die Achsen 71a, 71b sind zur Erzielung der Parallelogrammanordnung des Rotorgetriebes 60 parallel versetzt. Die obere Achse 71a ist durch ein Festlager 62 starr mit dem Spindelstock 31 verbunden. Insgesamt ist also die gesamte Koppeleinrichtung 70 starr mit dem Spindelstock 31 verbunden und wird von diesem getragen.

Die Achsen 71a, 71b, und damit die gesamte Koppeleinrichtung 70, sind gegenüber der Horizontalen derart geneigt, daß die Querstäbe 67, 68 vertikal ausgerichtet sind. An den Querstäben 67, 68 sind jeweils Greifer 81a, 81b an Trägern 80a, 80b zum Ergreifen von Werkzeughaltern 37a, 37b festgelegt. Ein Greifer 81b ist in Fig. 4 äußerst schematisch in Draufsicht dargestellt. Es versteht sich, daß an dem Greifer - nicht dargestellte - Mittel zum Festhalten der Werkzeughalter während des Wechselvorganges vorhanden sein können.

Die Rotoranordnung 60 ist symmetrisch, was nicht notwendig aber vorteilhaft ist, da die auftretenden Kräfte jeweils gleichmäßig auf die Achslager 71a, 71b, die Kugellager 69a - 69d und das Festlager 62 wirken.

Fig. 3 zeigt den Werkzeugwechsler 40 in einer Ausgangsposition, bei welcher ein Querarm 67 im Bereich der Magazinposition 38 und der andere Querarm 68 im Bereich der Arbeitsposition 36 angeordnet ist. Der in der Arbeitsposition gezeigte Werkzeughalter 37a ist in der Ausgangsposition bereits aus der Werkzeugaufnahme der Spindel entnommen.

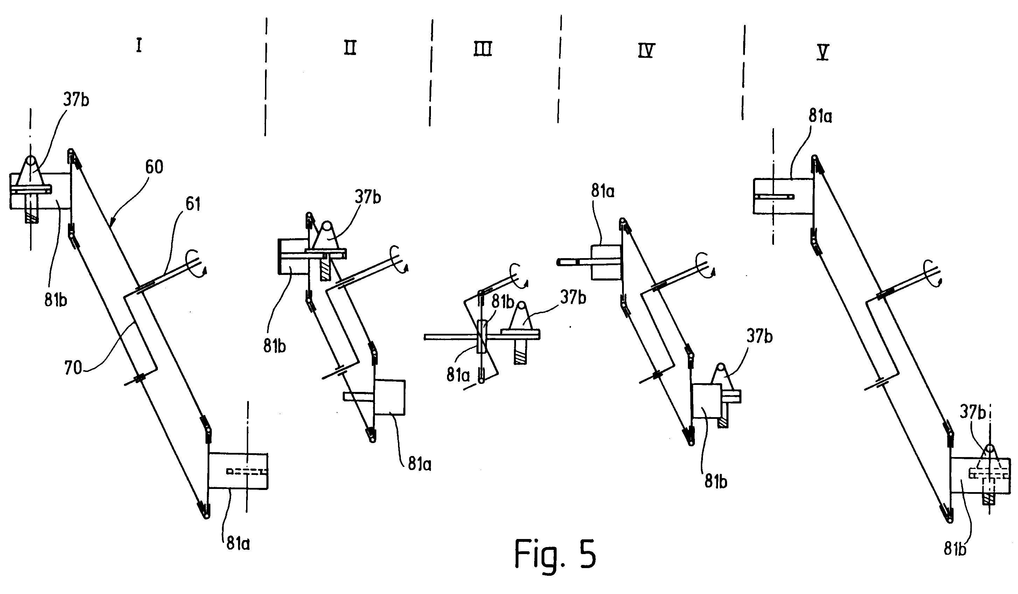

Der Betrieb des Werkzeugwechslers 40 wird nachstehend anhand der Phasendarstellungen eines Werkzeugwechselvorganges in Fig. 5 erläutert. In Fig. 5 ist aus Gründen der Anschaulichkeit lediglich ein Werkzeughalter 37b dargestellt, dessen Überführen von der Magazinposition in die Arbeitsposition anhand der Phasen I bis V dargestellt ist. Des weiteren ist in Fig. 5 die Anordnung aus Lager 75a und der als Hohlwelle ausgebildeten Antriebswelle 61 vereinfacht dargestellt.

Die in Fig. 5 gezeigte Phase I entspricht der in Fig. 3 gezeigten Ausgangsposition, bei welcher ein Querarm im Bereich der Arbeitsposition, der andere im Bereich der Magazinposition angeordnet ist.

Nachdem der Greifer 81b in der Magazinposition 38 den Werkzeughalter 37b für den nächsten Bearbeitungsschritt übernommen hat und, was nicht dargestellt ist, der Werkzeughalter des gerade beendeten Bearbeitungsschrittes vom Greifer 81a ergriffen worden ist, wird das Rotorgetriebe 60 durch die Antriebswelle 61 in Rotation versetzt.

In der als nächstes gezeigten Phase II hat die Antriebswelle 61 eine Rotation von 45° vollendet, wobei sich der Greifer 81b aus der Bildebene heraus und nach unten bewegt hat. Desgleichen hat sich der Greifer 81a in der Phase II etwas nach oben und hinter die Bildebene von Fig. 5 bewegt. Gleichzeitig erfolgt durch die Kinematik der über die Kreuzgelenke 69a bis 69d verbundenen Stäben 65 bis 68 eine Drehung der Querstäbe um 45°.

Nach einer Rotation der Antriebswelle 61 um 90° (Phase III) befinden sich die Greifer 81a, 81b auf gleicher Höhe, wobei der Greifer 81b gegenüber der Bildebene von Fig. 5 um den Rotationsradius der Längsstäbe hervortritt und der Greifer 81a um denselben Radius hinter die Bildebene hervorragt.

In Phase IV ist der Zustand nach einer Rotation um 135° gezeigt. Die Greifer 81a, 81b haben sich gegenüber der in Phase III gezeigten Position wieder zur Bildebene hin bewegt. Der Greifer 81b hat sich dabei weiter nach unten bewegt und der Greifer 81a weiter nach oben. Des weiteren hat sich die Rotation der Querstäbe fortgesetzt, die jetzt gegenüber der in Phase I gezeigten Position um 135° verdreht sind.

In Phase V ist der Endzustand eines Wechselvorganges gezeigt. Der Zustand der Phase V entspricht dem Grunde nach dem der Phase I, wobei nun jedoch der Greifer 81a im Bereich der Magazinposition und der Greifer 81b im Bereich der Arbeitsposition angeordnet ist. In diesem Zustand wird der Werkzeughalter 37b zur Vorbereitung des nächsten Bearbeitungsschrittes in die Werkzeugaufnahme der Spindel eingespannt und der sich im Greifer 81a befindliche Werkzeughalter wird ggf. zur Aufnahme eines Werkzeughalters für den übernächsten Bearbeitungsschritt entnommen.

Man sieht, daß die Position der Koppeleinrichtung 70 während des Wechselvorganges unverändert geblieben ist, wohingegen sich das Rotorgetriebe 60 um 180° um die Koppeleinrichtung 70 gedreht hat. Dabei sind die Querstäbe, an denen die Greifer 81a, 81b befestigt sind, über den gesamten Wechselvorgang vertikal ausgerichtet geblieben, haben sich jedoch aufgrund der Kinematik der Kreuzgelenke um 180° gedreht, was aus Fig. 5 durch einen Vergleich der Phasen I und V leicht hervorgeht. Denn in Phase I ist der Werkzeughalter 37b vor dem Greifer 81a zu sehen, wahrend er in Phase V durch diesen verdeckt ist.

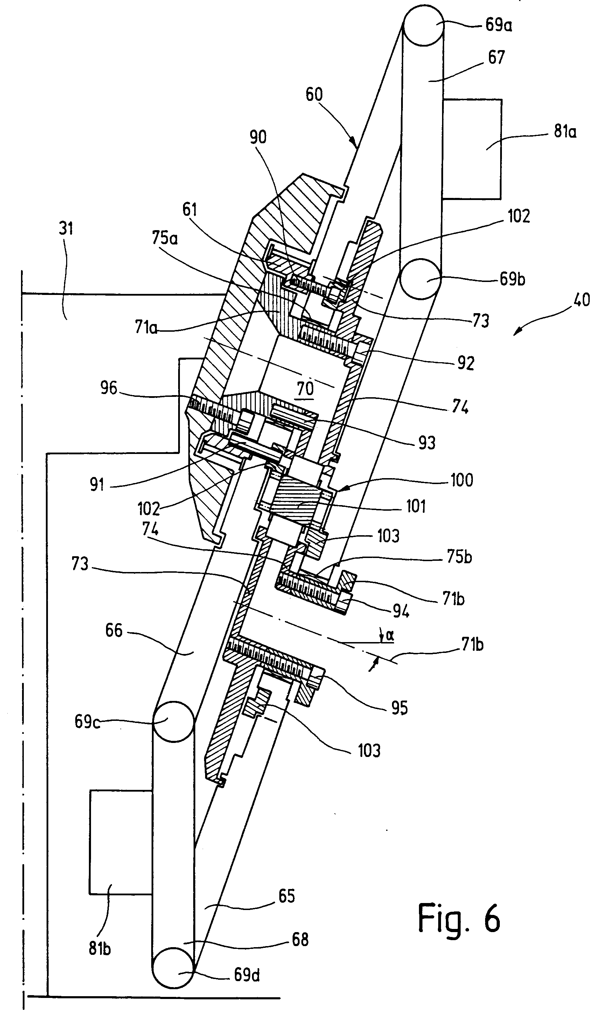

Fig. 6 zeigt eine weitere Ausführungsform eines Werkzeugwechslers 40 der erfindungsgemäßen Werkzeugmaschine. Bei Fig. 6 handelt es sich um eine Schnittdarstellung, wobei auf eine Schraffur der Stäbe 65 bis 68 aus Gründen der Übersichtlichkeit verzichtet wurde.

Der grundsätzliche Aufbau und die Arbeitsweise dieses Werkzeugwechslers unterscheidet sich nicht von der in Fig. 3 gezeigten Ausführungsform. Insoweit sind gleiche Teile mit gleichen Bezugsziffern versehen. Allerdings unterscheidet sich diese Ausführungsform von der in Fig. 3 gezeigten Ausführungsform durch die besondere Ausgestaltung der Koppeleinrichtung 70 und dadurch, daß ein Zahnradgetriebe 100 vorgesehen ist, um die beiden Längsstäbe 65, 66 antriebsmäßig miteinander zu koppeln.

Die Koppeleinrichtung 70 weist zwei als Hohlachsen ausgebildete Achsen 71a, 71b zur Lagerung der Längsstäbe 65, 66 auf. Die Achsen 71a, 71b sind durch zwei starr verbundene Koppelscheibenelemente 73, 74 starr miteinander verbunden.

Der in Fig. 6 oben liegenden Längsstab 66 ist durch eine Schraube 90 sowie einen Bolzen 91 starr mit der Antriebswelle 61 verbunden, die hier als Zahnriemenscheibe ausgebildet ist. Die Achse 71a ist durch eine Reihe von Schrauben starr an dem Spindelstock 31 festgelegt, von denen in Fig. 6 nur eine 96 gezeigt ist. Die Achsen 71a, 71b und die Koppelscheibenelemente 73, 74 sind durch Schrauben 92, 94, 95 sowie einen Bolzen 93 starr untereinander verbunden.

Die beiden Koppelscheibenelemente 73, 74 bilden einen Hohlraum aus, der mit den Hohlräumen der Hohlachsen 71a, 71b verbunden ist. Durch diese Hohlräume können Kabel oder Schläuche zur Energiezufuhr, insbesondere für die Greifer 81a, 81b geführt werden, was in Fig. 6 nicht dargestellt ist.

Schließlich ist in dem durch die Koppelscheibenelemente 73, 74 gebildeten Hohlraum eine zentrale Zahnradwalze 101 angeordnet und an den Koppelscheibenelementen 73, 74 drehbar gelagert. Die Zahnradwalze 101 weist endseitig jeweils ein Zahnrad auf, die aus dem durch die Koppelscheibenelemente 73, 74 gebildeten Hohlraum hervortreten. Sie stehen mit Zahnrädern 102, 103 kämmend in Eingriff, die an den Längsstäben 65 bzw. 66 festgelegt sind. Durch das Zahnradgetriebe 100 wird eine dem Längsstab 66 mittels der Antriebswelle 61 erteilte Drehbewegung unmittelbar auch dem Längsstab 65 erteilt. Hierdurch wird erreicht, daß die Kreuzgelenke 69a bis 69d während des Rotationsvorganges, insbesondere beim Beschleunigen und Abbremsen keine Kräfte übertragen müssen.

## Patentansprüche

1. Werkzeugmaschine mit einer Spindel (35) und einem Werkzeugwechsler (40) zum Überführen von Werkzeughaltern (37a, 37b) zwischen einer Magazinposition (38) und einer Arbeitsposition (36) an der Spindel (35) im wesentlichen unter Beibehaltung der Ausrichtung der Werkzeughalter (37a, 37b), wobei die Werkzeughalter in an dem Werkzeugwechsler (40) vorgesehenen Greifern (81a, 81b) gehalten sind,
dadurch gekennzeichnet, daß
der Werkzeugwechsler (40) zwei Längsstäbe (65, 66) und zwei Querstäbe (67, 68) aufweist, die über Kreuzgelenke (69a - 69d) zu einem Gelenkviereck verbunden sind, daß die Längsstäbe (65, 66) im Bereich ihrer Mitte drehbar gelagert sind und daß an den Stäben (65 - 68) zwei Greifer (81a, 81b) zum Ergreifen der Werkzeughalter (37a, 37b) angebracht sind, derart, daß bei einer Rotation der Längsstäbe (65, 66) die Greifer (81a, 81b) zwischen der Magazinposition (38) und der Arbeitsposition (36) überführt werden.

2. Werkzeugmaschine nach Anspruch 1, dadurch gekennzeichnet, daß die Greifer (81a, 81b) an den Querstäben (67, 68) angebracht sind.

3. Werkzeugmaschine nach Anspruch 1 oder 2, dadurch gekennzeichnet, daß Achsen (71a, 71b), auf denen die Längsstäbe (65, 66) drehbar gelagert sind, parallel versetzt sind, so daß die Stäbe (65 - 68) zumindest in einer Ausgangsposition, bei der ein Querarm im Bereich der Arbeitsposition (36) und der andere Querarm im Bereich der Magazinposition (38) ist, ein Gelenkparallelogramm bilden.

4. Werkzeugmaschine nach Anspruch 3, dadurch gekennzeichnet, daß der Abstand der parallelen Achsen (71a, 71b) im Bereich zwischen einer halben und einer viertel Länge der Längsachse, vorzugsweise bei etwa einem Drittel der Länge der Längsstäbe (65, 66) liegt.

5. Werkzeugmaschine nach Anspruch 3 oder 4, dadurch gekennzeichnet, daß die Achsen (71a, 71b) gegenüber der Horizontalen so geneigt sind, daß die Querarme (67, 68) vertikal ausgerichtet sind.

6. Werkzeugmaschine nach Anspruch 5, dadurch gekennzeichnet, daß die Achsen (71a, 71b) in einem Bereich von 10 bis 30°, vorzugsweise um 20° geneigt sind.

7. Werkzeugmaschine nach einem der Ansprüche 1 bis 6, dadurch gekennzeichnet, daß das Verhältnis der Länge der Längsarme (65, 66) zur Länge der Querarme (67, 68) zwischen 2 und 4, vorzugsweise bei etwa 3 liegt.

8. Werkzeugmaschine nach einem der Ansprüche 3 bis 7, dadurch gekennzeichnet, daß die Achsen (71a, 71b) durch ein Koppelglied (72; 73, 74) verbunden sind.

9. Werkzeugmaschine nach einem der Ansprüche 3 bis 8, dadurch gekennzeichnet, daß die Längsstäbe (65, 66) antriebsmäßig miteinander gekoppelt sind.

10. Werkzeugmaschine nach Anspruch 9, dadurch gekennzeichnet, daß die Längsstäbe (65, 66) durch ein Zahnradgetriebe (100) gekoppelt sind.

11. Werkzeugmaschine nach Anspruch 10, dadurch gekennzeichnet, daß das Zahnradgetriebe (100) eine zentrale Zahnradwalze (101) sowie zwei Zahnräder (102, 103) aufweist, die mit den zwei Langsstäben (65, 66) jeweils starr verbunden sind und mit der zentralen Zahnradwalze (101) kämmen.

12. Werkzeugmaschine nach Anspruch 11, dadurch gekennzeichnet, daß die zentrale Zahnradwalze (101) an dem Koppelglied (73, 74) drehbar gelagert ist.

13. Werkzeugmaschine nach einem der Ansprüche 8 bis 12, dadurch gekennzeichnet, daß das Koppelglied (73, 74) hohl ist.

14. Werkzeugmaschine nach einem der Ansprüche 8 bis 13, dadurch gekennzeichnet, daß das Koppelglied (73, 74) gleichzeitig als Spritzschutz ausgebildet ist.

## Claims

1. A machine tool comprising a spindle (35) and a tool changer (40) for conveying tool holder (37a, 37b) between a magazine position (38) and a working position (36) at the spindle (35) while substantially maintaining the orientation of the tool holders (37a, 37b), the tool holders being held in grippers (81, 81b) provided at the tool changer (40),
characterized in that
the tool changer (40) comprises two longitudinal rods (65, 66) and two transverse rods (67, 68) that are joined together via universal joints (69a-69d) so as to form an articulated rectangle, the longitudinal rods (65, 66) being rotatably mounted in the vicinity of their respective center, two grippers (81a, 81b) for gripping the tool holders (37a, 37b) being mounted on said rods (65-68) such that upon rotation of the longitudinal rods (65, 66) said grippers (81a, 81b) are conveyed between the magazine position (38) and the working position (36).

2. The machine tool of claim 1, characterized in that the grippers (81a, 81b) are mounted on the transverse rods (67, 68).

3. The machine tool of claim 1 or claim 2, characterized in that shafts (71a, 71b) the longitudinal rods (65, 66) are rotatably mounted on are offset in parallel fashion such that at least in an initial position, in which one transverse arm is in the vicinity of the working position (36) and the other transverse arm is in the vicinity of the magazine position (38), the rods (65-68) form an articulated parallelogram.

4. The machine tool of claim 3, characterized in that the spacing between the parallel shafts (61a, 61b) is in the range between one-half and one-quarter of the length of the longitudinal rods, preferably approximately one-third of the length of the longitudinal rods (65, 66).

5. The machine tool of claim 3 or claim 4, characterized in that the shafts (71a, 71b) are tilted with respect to the horizontal such that the transverse arms (67, 68) are oriented vertically.

6. The machine tool of claim 5, characterized in that the shafts (71a, 71b) are tilted in the range between 10 and 30 degrees, preferably by 20 degrees.

7. The machine tool of any of claims 1 - 6, characterized in that the ratio between the length of the longitudinal arms (65, 66) and the length of the transverse arm (67, 68) is between 2 and 4, preferably approximately 3.

8. The machine tool of any of claims 3 - 7, characterized in that the shafts (71a, 71b) are joined together by a coupling member (72; 73, 74).

9. The machine tool of any of claims 3 - 8, characterized in that the longitudinal rods (65, 66) are drive-coupled to one another.

10. The machine tool of claim 9, characterized in that the longitudinal rods (65, 66) are coupled by a gear drive train (100).

11. The machine tool of claim 10, characterized in that the gear drive train (100) has a central toothed roller (101) as well as two gears (102, 103) which are rigidly joined respectively to the two longitudinal rods (65, 66) and mesh with the central toothed roller (101).

12. The machine tool of claim 11, characterized in that the central toothed roller (101) is mounted rotatably on the coupling member (73, 74).

13. The machine tool of any of claims 8 - 12, characterized in that the coupling member (73, 74) is hollow.

14. The machine tool of any of claims 8 - 13, characterized in that the coupling member (73, 74) is at the same time configured as a spray shield.

## Revendications

1. Machine-outil comportant une broche (35) et un changeur d'outil (40) pour le transfert de porte-outils (37a, 37b) entre une position de magasin (38) et une position de travail (36) sur la broche (35), en conservant sensiblement l'orientation des porte-outils (37a, 37b), les porte-outils étant maintenus dans des préhenseurs (81a, 81b) prévus sur le changeur d'outil (40),
caractérisée en ce que
le changeur d'outil (40) comporte deux barres longitudinales (65, 66) et deux barres transversales (67, 68), qui sont reliées par des joints à croisillon (69a à 69d) pour former un quadrilatère articulé, en ce que les barres longitudinales (65, 66) sont montées tournantes dans la région de leur milieu et en ce que sur les barres (65 à 68) sont fixés deux préhenseurs (81a, 81b) destinées à saisir les porte-outils (37a, 37b), de manière que lors d'une rotation des barres longitudinales (65, 66), les préhenseurs (81a, 81b) soient transférés entre la position de magasin (38) et la position de travail (36).

2. Machine-outil selon la revendication 1, caractérisée en ce que les préhenseurs (81a, 81b) sont montés sur les barres transversales (67, 68).

3. Machine-outil selon la revendication 1 ou 2, caractérisée en ce que des axes (71a, 71b) sur lesquels les barres longitudinales (65, 68) sont montées tournantes, sont décalés parallèlement, de manière que les barres (65 à 68) forment un parallélogramme articulé, au moins dans une position initiale dans laquelle un bras transversal se trouve dans la région de la position de travail (36) et l'autre bras transversal, dans la région de la position de magasin (38).

4. Machine-outil selon la revendication 3, caractérisée en ce que la distance entre les axes parallèles (71a, 71b) est comprise entre une demi-longueur et un quart de longueur de l'axe longitudinal, de préférence égale à environ un tiers de la longueur des barres longitudinales (65, 66).

5. Machine-outil selon la revendication 3 ou 4, caractérisée en ce que les axes (71a, 71b) sont inclinés par rapport à l'horizontale, de manière que les bras transversaux (67, 68) soient orientés verticalement.

6. Machine-outil selon la revendication 5, caractérisée en ce que les axes (71a, 71b) sont inclinés d'une valeur comprise entre 10 et 30°, de préférence de 20°.

7. Machine-outil selon l'une des revendications 1 à 6, caractérisée en ce que le rapport de la longueur des bras longitudinaux (65, 66) et de la longueur des bras transversaux (67, 68) est compris entre 2 et 4, de préférence environ égal à 3.

8. Machine-outil selon l'une des revendications 3 à 7, caractérisée en ce que les axes (71a, 71b) sont reliés par un élément de couplage (72; 73, 74).

9. Machine-outil selon l'une des revendications 3 à 8, caractérisée en ce que les barres longitudinales (65, 66) sont couplées entre elles en transmission.

10. Machine-outil selon la revendication 9, caractérisée en ce que les barres longitudinales (65, 66) sont couplées par une transmission à engrenages (100).

11. Machine-outil selon la revendication 10, caractérisée en ce que la transmission à engrenages (100) comporte un rouleau à roues dentées (101) ainsi que deux roues dentées (102, 103), qui sont reliées rigidement respectivement aux deux barres longitudinales (65, 66) et qui engrènent avec le rouleau à roues dentées (101) central.

12. Machine-outil selon la revendication 11, caractérisée en ce que le rouleau à roues dentées (101) central est monté tournant sur l'élément de couplage (73, 74).

13. Machine-outil selon l'une des revendications 8 à 12, caractérisée en ce que l'élément de couplage (73, 74) est creux.

14. Machine-outil selon l'une des revendications 8 à 13, caractérisée en ce que l'élément de couplage (73, 74) est réalisé en même temps en tant que protection contre les projections.
